# EUROPEAN PATENT SPECIFICATION

(11) **EP 1 699 379 B1**
(45) Date of publication and mention of the grant of the patent: **24.06.2009**
(21) Application number: 04809090.6
(22) Date of filing: 20.12.2004
(51) Int. Cl.: A61C 8/00

(54) **IMPLANT**
IMPLANTAT
IMPLANT

(30) Priority: 22.12.2003 SE 0303460
(43) Date of publication of application: 13.09.2006
(73) Proprietor: Nobel Biocare AB (publ), 402 26 Göteborg (SE)
(72) Inventor: JÖRNEUS, Lars, S-430 30 Frillesås (SE); DURIC, Sanel, S - 414 80 Göteborg (SE)
(74) Representative: Byström, Kurt Linus
(86) International application number: PCT/SE2004/001917
(87) International publication number: WO 2005/060863

(56) References cited:
- WO-A1-95/12369
- WO-A1-03/013383
- US-A1- 5 820 374

## Description

### AREA OF INVENTION

The present invention relates to an implant which can be fitted in an implantation site in a hole formed in a jaw bone, where the implant is exposed to an impinging force or impinging forces. The implant comprises one or more peripherally extending surfaces which are arranged at its upper portion and which can be placed against a jaw bone bone part at the outlet opening of the hole.

### BACKGROUND OF INVENTION

The present invention is based, inter alia, on the concept that osteoconduction can be increased with a certain type of groove or recess in the surface. Reference is made in this connection to WO 97/05238 (Boyde) and to the patent publication no. WO 2005/055 859 published on June 23, 2005.

When fitting implants of the type in question, it is important to be able to achieve excellent osteoconduction between the jaw bone in question and the implant and to avoid bone absorption, even marginal bone absorption, during the stages of implantation and incorporation. It is also important that the implant is able to resist the force, or forces which impinge on the implant in a principal direction. An inclination of the implant, for example because of the jaw bone situation, must not give rise to movements between implant and jaw bone which prevent a good implantation result. The same applies when the implant supports a tooth replacement in a position which, for example during chewing movements, means that the principal direction of the force or forces are inclined in relation to the longitudinal direction of the implant, which can result in disadvantageous forces acting on the implant and can cause a tendency for the implant to loosen.

WO 03 013383, discloses an implant, the surface of which is provided with a multitude of grooves, which extend in the direction of the implant's longitudinal axis or at an acute angle thereto. Said grooves form an angle alpha radial to the longitudinal axis of the implant body in at least one of a number of sections and the grooves have a varying depth over the length thereof. The grooves can be provided with a cuneiform or rhomboidal shape or have a curved wedge shape or are provided in the form of longitudinally extended curved segments that have a varying depth over their length and extend in an axial, helical or crosswise manner with regard to the periphery of the implant. The surface structure formed in such a manner enables an improved accumulation of the osteon bone tissue. A titanium layer is applied by sputtering to the implant surface and enables an embedding of the osteocytes in cavities created thereby. The surface structure can be used, preferably in tooth implants, but also when altering bone implants including those having a curved longitudinal axis.

EP 1 013 236 discloses an implant with an body divided into steps forming a flange. The perimeter of two of the steps have crosswise grooves that have two directions of inclination. The grooves are 20-300 µm wide and 10-150 µm deep.

### SUMMARY OF INVENTION

An object of the present invention is, among other things, to solve the above-mentioned problems and propose a pattern arrangement of grooves, which, in addition to the known osteoconduction of the grooves, also makes the implant resistant to inclinations between the principal direction of an impinging force or impinging forces and the longitudinal direction of the implant.

The increased resistance to forces directed at an angle in relation to the implant may also be such as to ensure that bacteria and/or organisms which tend to cause inflammation do not penetrate from the implant's upper edge (oral cavity) to lower parts of the implant. An embodiment of the invention also solves this problem.

In the invention, there is provided a dental implant intended to be fitted in a hole formed in a jaw bone for being exposed to an impinging force or impinging forces, said implant comprising: one or more peripherally extending surfaces at an upper portion of the implant arranged on a flange arrangement comprising an inner socket for a turning tool and intended to be arranged adjacent an outlet opening of said hole, whereby a pattern of grooves are arranged on said surface at parts of said flange arrangement, wherein said grooves have at least two directions of inclination, wherein the grooves (10) have a depth (D), which is between 50 - 100 µm, such as ca. 70 µm, and the grooves have a width (B), which is between 100 - 150 µm, such as ca. 110 µm.

In an embodiment, the inner socket may be polygonal, toothed or provided with two or more wings.

In a further embodiment, the pattern of grooves may comprise straight and parallel groove parts with at least two directions of inclination and arranged round all or part of the peripheral surface.

In a still further embodiment, the flange arrangement may be cylindrical, conical or scalloped.

In a still further embodiment, a considerable number, for example 20% or more, of the grooves and/or recesses are designed so that, in the implantation site, they extend substantially at right angles to, and if appropriate parallel to, said forces when these assume principal directions differing from the longitudinal direction of the implant.

In a yet another embodiment, the grooves (10) and/or recesses are closed, i.e. have no connection to the upper and/or lower parts (9d, 9e) of the portion, and thus prevent passage of bacteria and/or organisms (13) from the upper parts to the lower or inner parts of the implant.

In a yet further embodiment, the pattern may comprise one or more groups of grooves arranged mutually parallel and with different longitudinal extents.

In a yet still another embodiment, the principal direction of the impinging force or forces may for the most part be oblique in relation to the longitudinal direction of the fitted implant, because the implant assumes an inclined position in the hole formed in the jaw bone. The principal direction of the impinging force or forces may for the most part be oblique in relation to the fitted implant, because of the oblique settings of impinging force or forces in the implantation environment (cf. chewing movements). The groove or recess pattern may be unique for a first implant design which differs in respect of this pattern from a second implant design. The implant may be exposed to forces with mutually different directions, and in that a first part or parts of the groove and/or recess pattern may be substantially at right angles in relation to a first force direction and in that a second part or parts of the pattern may be substantially at right angles in relation to a second force direction and, if appropriate, so on, if a further force direction or force directions is/are present.

The above goes against the prevailing views in the dental field by proposing that the surface will be patterned with grooves/recesses. Normally, the aim is for the surface at the outlet opening of the hole to be polished so as to make it easier to keep the surface clean from bacteria and/or organisms of a nature tending to cause inflammation. Such polishing, however, counters said osteoconduction function and makes integration between the surface material of the implant and the jaw bone difficult. The osteoconduction function of the grooves improves bone incorporation, and arranging the grooves in the manner proposed according to the invention counteracts microscopic movements and shearing stresses in the already incorporated bone for the purpose of maintaining the bone level and of preventing bone absorption. Methods known per se can be used to produce the groove and recess arrangements. Thus, it may be possible to use mechanical working, for example turning, milling or engraving. It is also known per se to produce the groove and/or recess arrangement by laser treatment of the surface. Different implants can be provided with different patterns to meet different implantation situations, for example different tooth functions, implant positions in the dentine, etc. Implants with different patterns can thus be made available on the market to provide choice to the specialists concerned.

### BRIEF DESCRIPTION OF THE DRAWINGS

A presently proposed embodiment of an arrangement having the features characteristic of the invention will be described below with reference to the attached drawings, in which:
Figure 1 is a diagrammatic vertical cross-sectional view through an implantation in the jaw bone where forces acting on the implant have directions/principal directions differing from the longitudinal direction of the implant,
Figure 2 is a diagrammatic vertical cross-sectional view through an implant which is inclined in the implantation site in the jaw bone, with the result that a force with a vertical direction of action differs from the longitudinal extent of the implant,
Figure 3 is an enlarged vertical cross-sectional view through a type of groove or recess which contributes to excellent osteoconduction,
Figure 4 is a vertical view of the closed groove or recess arrangement in which bacteria are prevented from moving from the upper parts to the lower parts,
Figure 5 is a side view of a first pattern arrangement, developed in the plane of the figure,
Figure 6 is a perspective view, obliquely from above, showing parts of an implant with a number of different pattern arrangements, and
Figure 7 is a perspective view, obliquely from above, showing parts of two other types of implants with a number of different pattern arrangements.

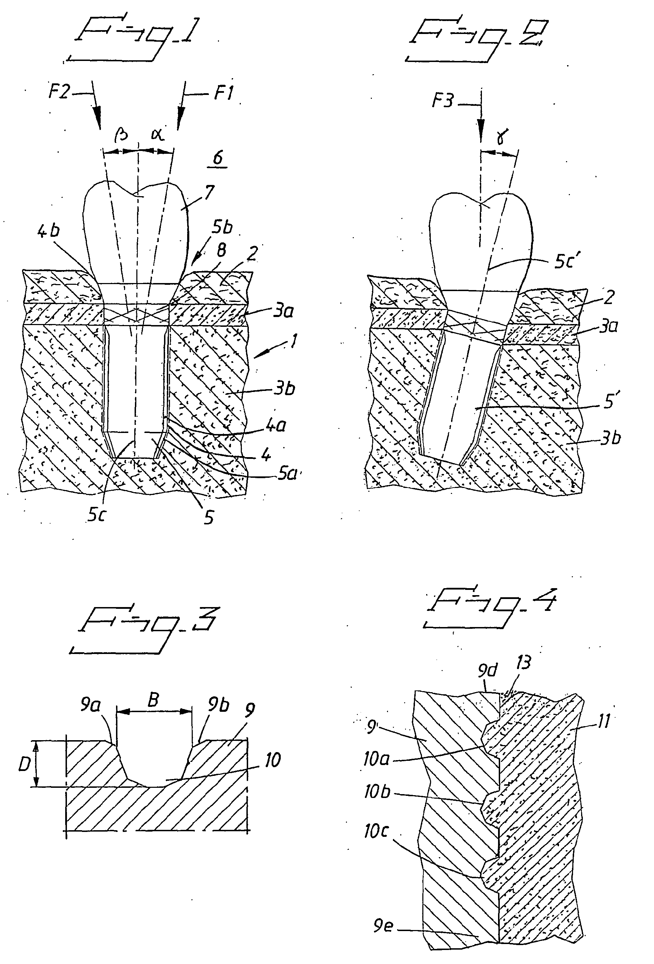

In Figure 1, a jaw bone is shown diagrammatically by reference number 1. The jaw bone comprises a soft tissue part 2 and, lying under this, a bone part consisting of cortical bone 3a and spongy bone 3b. The jaw bone is provided with a hole 4. An implant 5 is fitted in the hole. The hole can have an internal thread 4a, and the implant is provided with an external thread 5a, by means of which the implant can be screwed into the hole in a manner known per se. The implant is provide with an upper or outer portion 5b which, when the implant is in position in the jaw bone it is arranged at the outlet opening 4b from the hole 4 to the oral cavity, which is indicated symbolically by 6. The implant is intended to support a prosthesis indicated symbolically by reference number 7. The upper portion 5b of the implant is provided with a pattern 8 of grooves and/or recesses. In accordance with the concept of the invention, the grooves and/or recesses in the pattern are arranged such that some of the grooves and/or recesses, for example 20% or more, will be substantially at right angles with respect to the forces acting on the implant when said implant is in the implanted position. Examples of impinging forces and their directions are indicated by F1 and F2. On account of the situation in the oral cavity, the prosthesis type, implant position, etc., the forces F1 and/or F2 can have principal directions differing from the longitudinal axis 5c of the implant. These differences have been defined in Figure 1 with the aid of angles α and β. Each angle in cross section thus gives the difference between the respective direction of each impinging force.

The differences between the longitudinal axis of the implant and the principal direction of the force can also be caused by the implant assuming an oblique positions. Such an example is shown in Figure 2 where the implant 5' is set obliquely in the parts 2 and 3 of the jaw bone 1. The longitudinal axis 5c' of the implant thus slopes in the jaw bone, and a force F3 applied vertically to the implant has a principal direction differing from said longitudinal axis 5c' by an angle γ. In this case too, some of the grooves and/or recesses are arranged substantially at right angles to the principal direction of the force F3.

Figure 3 is intended to show the very advantageous groove construction which also promotes the aforementioned osteoconduction. The groove or the recess will have a depth D in the range of 50 - 100 µm, preferably of the order of ca. 70 µm. The width or breadth B of the groove will be chosen in the range of 100 - 150 µm and will preferably be ca. 110 µm. The groove or recess is arranged in the upper portion of the implant (see 5b in Figure 1). In Figure 3, the portion has been designated by 9. The groove has been given reference number 10. The value B is calculated or measured at the positions of the bevel 9a and 9b.

In accordance with what has been stated above, said grooves will preferably form a closed system. In accordance with Figure 4, the jaw bone part 11 bears via its inner surface against the portion 9. In Figure 4, said groove or recess arrangement is represented by groove parts 10a, 10b and 10c which, in Figure 4, extend substantially at right angles to the plane of the Figure. In Figure 4; growth of bone established in the groove has also been shown and is indicated by 12. In accordance with the concept of the invention, said groove arrangements 10a, 10b and 10c are not open toward the upper parts 9d of the portion 9 and the lower parts 9e of said portion, with the result that any accumulation of bacteria and/or organisms 13 cannot penetrate down from said upper parts 9d to the deeper-lying parts 9e of the implant. In this way it is possible to effectively prevent.inflammation tendencies in said underlying parts which would be caused by said bacteria and/or organisms.

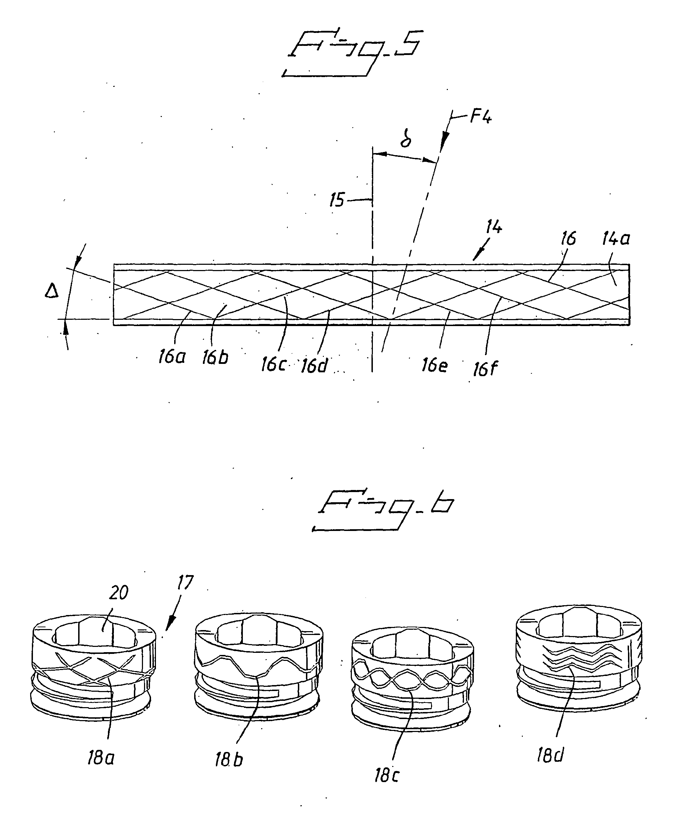

In Figure 5, the aforementioned portion is indicated by 14. In the present case, the portion is shown developed in a plane. The longitudinal axis of the implant is in this case designated by 15, and an oblique impinging force is indicated by F4. The principal direction of the force F4 is indicated by a dot-and-dash line. The angle between the principal direction of the force F4 and the longitudinal axis 15 is indicated by δ. The pattern indicated in Figure 5 is shown by 16. The pattern is composed of a set of parallel groove parts 16a, 16b, 16c, 16d, 16e and 16f. The distance between the groove parts can be the same or can vary between the various groove parts. The sets of groove parts are angled in relation to one another by an angle Δ, so that the grooves have at least two directions of inclination. In one embodiment of the pattern arrangement, the angle range for Δ can be chosen within 10 - 45°. The impinging force F4 can in principle be divided into a vertical force component which coincides with or extends parallel to the longitudinal axis 15, and a horizontal force component which extends at right angles in relation to said longitudinal axis 15. The pattern arrangement can be configured such that the vertical force component substantially exceeds the horizontal force component, so that forces are effectively taken up by the groove arrangement even in the case where the force direction of F4 is not entirely at right angles to the actual groove part, for example groove part 16e. The groove parts and/or recesses can extend all round the peripheral surface 14a or along selected parts of the surface as seen in the circumferential direction, thereby forming groups of pattern.

Figure 6 shows a number of other embodiments of pattern arrangements at the upper, cylindrical portion 17 of the implant. The pattern configuration in question can consist of a sinusoidal arrangement disposed so that forces are taken up in accordance with the above. The implant is provided with an internal socket for a turning tool (not shown). The socket is indicated by 20 and can be a socket with two or more wings, a toothed socket, a polygonal socket, etc. In this case, the portion 17 is provided with a number of pattern arrangements 18a, 18b, etc., along the circumferential surface 17. The arrangement of patterns can be provided at locations which, because of the socket arrangement 20, have a greater thickness than other locations. This avoids undue weakening of the portion at parts of lesser thickness.

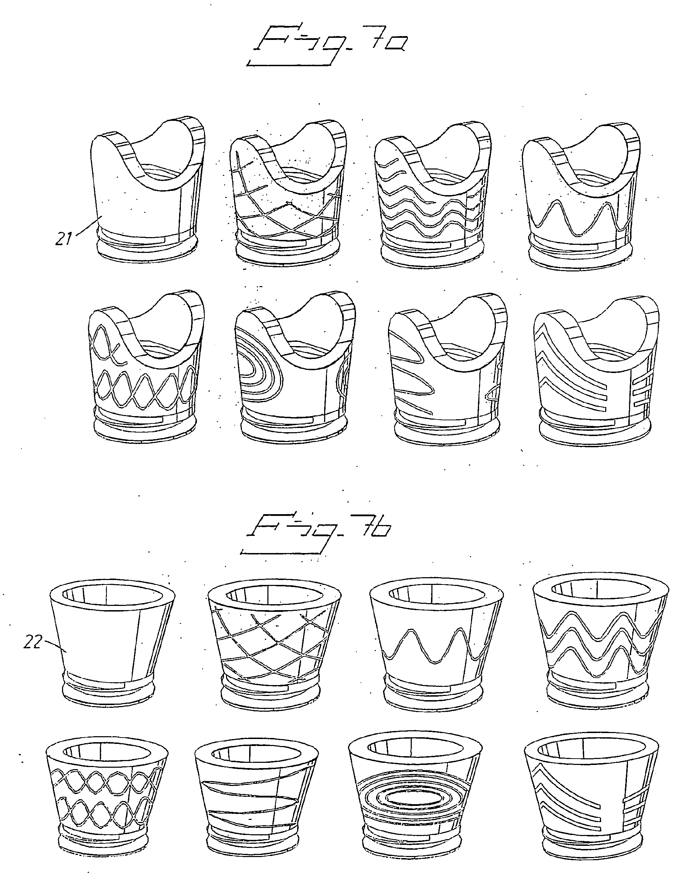

Figure 7 shows a number of embodiments of patterns, on the one hand on what is called a scalloped implant 21, see Figure 7a, and on the other hand on an implant with a conical circumferential surface 22, see Figure 7b. Regarding scalloped implants, reference is made for example to WO 03/059189. The pattern arrangements can be divided up along the surface in the same way as in the case according to Figure 6. A common feature of the pattern arrangement parts is that they have at least two directions of inclination.

Different implants with different patterns can be made available on the general market. The implants with the different patterns can be provided for different main types of implantation cases. The illustrative embodiments according to Figures 1 and 2 can relate to a case where different implantation situations are present in the same patient. The inclinations of the principal direction of the impinging force or forces are dependent on the use (chewing movements) and positions and on the tooth type which the prosthesis in question is intended to represent. Said portion of the implant can consist of a flanged portion.

The invention is not limited to the embodiment shown by way of example above, and instead it can be modified within the scope of the attached patent claims.

## Claims

1. An implant (5) intended to be fitted in an implantation site in a hole (4) formed in a jaw bone (1) where it is exposed to an impinging force or impinging forces (F1, F2), said implant comprising one or more peripherally extending surfaces (14a), which are arranged at an upper/outer portion of the implant and intended to be placed against a jaw bone part at the outlet opening (4b) of the hole,
wherein
the implant is provided with an external thread (5a), by means of which the implant (5) can be screwed into the hole (4);
the upper/outer portion has an inner socket (20) for a turning tool;
said peripherally extending surfaces (14a) are formed on a flange arrangement;
each surface is provided with a pattern (8) of grooves (10) and/or recesses;
said pattern of grooves having at least two directions of inclination;
the grooves (10) and/or recesses have a depth (D) which lies in the range of 50 - 100 µm, and is preferably ca. 70 µm; and
the grooves (10) and/or recesses have a width (B) in the range of 100 - 150 µm, preferably ca. 110 µm.

2. The implant as claimed in patent claim, **characterized in that** the inner socket (20) is polygonal, toothed or with two or more wings, and the grooves and/or the recesses are arranged at parts (17b, 17c) of greater material thickness at the upper/outer portion.

3. The implant as claimed in any of the preceding patent claims, **characterized in that** the pattern comprises straight and parallel groove parts (16a, 16a') which are arranged round all or part of the peripheral surface, and **in that** the groove parts extend 10 - 45° in relation to a cross section surface which is perpendicular to the longitudinal axis (15) of the implant.

4. The implant as claimed in any of patent claims 1-3, **characterized in that** the pattern comprises sinusoidal groove and/or recess parts (18b, 18c, 18d).

5. The implant as claimed in any of patent claims 1-2, **characterized in that** the pattern comprises one or more groups of grooves (18d) arranged mutually parallel and with different longitudinal extents.

6. The implant as claimed in any of patent claims 1-5, **characterized in that** said flange arrangement (17) is cylindrical.

7. The implant as claimed in any of patent claim 1 - 5, **characterized in that** said flange arrangement (22) is conical.

8. The implant as claimed in any of patent claim 1 5, **characterized in that** said flange arrangement (21) is scalloped.

## Patentansprüche

1. Implantat (5), das an einem Implantationsort in einem, in einem Kieferknochen (1) ausgebildeten Loch (4) befestigt werden soll, wo es einer Stoßkraft oder Stoßkräften (F1, F2) ausgesetzt ist, wobei das Implantat eine oder mehrere sich in Umfangsrichtung erstreckende Flächen (14a) aufweist, die an einem oberen/äußeren Teil des Implantats angeordnet sind und an einem Kieferknochenteil an der Ausgangsöffnung (4b) des Loches zur Anlage gebracht werden sollen,
wobei
das Implantat mit einem Außengewinde (5a) versehen ist, mittels welchem das Implantat (5) in das Loch (4) geschraubt werden kann,
der obere/äußere Teil eine innere Buchse (20) für ein Drehwerkzeug hat;
die sich in Umfangsrichtung erstreckenden Flächen (14a) auf einer Flanschanordnung ausgebildet sind;
jede Fläche mit einem Muster (8) aus Nuten (10) und/oder Aussparungen versehen ist;
das Muster aus Nuten wenigstens zwei Neigungsrichtungen aufweist;
die Nuten (10) und/oder Aussparungen eine Tiefe (D) aufweisen, die im Bereich von 50 - 100 µm liegt und vorzugsweise ca. 70 µm ist; und
die Nuten (10) und/oder Aussparungen eine Breite (B) im Bereich von 100 bis 150 µm, vorzugsweise ca. 110 µm haben.

2. Implantat nach Anspruch 1, **dadurch gekennzeichnet, dass** die innere Buchse (20) polygonal, gezahnt oder mit zwei oder mehr Flügeln versehen ist, und die Nuten und/oder Aussparungen an Teilen (17b, 17c) mit größerer Materialdicke an dem oberen/äußeren Teil angeordnet sind.

3. Implantat nach einem der vorstehenden Ansprüche, **dadurch gekennzeichnet, dass** das Muster gerade und parallele Nutenteile (16a, 16a') aufweist, die um die gesamte Umfangsfläche oder einen Teil derselben angeordnet sind, und dass die Nutenteile sich mit einem Winkel von 10 bis 45° mit Bezug auf eine Querschnittsfläche, senkrecht zu der Längsachse (15) des Implantats, erstrecken.

4. Implantat nach einem der Ansprüche 1 bis 3, **dadurch gekennzeichnet, dass** das Muster sinusförmige Nuten - und/oder Aussparungsteile (18b, 18c, 18d) aufweist.

5. Implantat nach einem der Ansprüche 1 bis 2, **dadurch gekennzeichnet, dass** das Muster eine oder mehrere Gruppen von Nuten (18d) aufweist, die zueinander parallel und mit unterschiedlichen Längserstreckungen angeordnet sind.

6. Implantat nach einem der Ansprüche 1 bis 5, **dadurch gekennzeichnet, dass** die Flanschanordnung (17) zylindrisch ist.

7. Implantat nach einem der Ansprüche 1 bis 5, **dadurch gekennzeichnet, dass** die Flanschanordnung (22) konisch ist.

8. Implantat nach einem der Ansprüche 1 bis 5, **dadurch gekennzeichnet, dass** die Flanschanordnung (21) gezahnt ist.

## Revendications

1. Implant (5) destiné à être ajusté dans un site implantaire dans une cavité (4) formée dans une mâchoire (1) où il est exposé à une force d'empiétement ou à des forces d'empiètement (F1, F2), ledit implant comprenant une ou plusieurs surfaces (14a) s'étendant de manière périphérique, qui sont agencées au niveau d'une partie supérieure/externe de l'implant et destiné (es) à être placé (es) contre une partie de la mâchoire au niveau de l'ouverture de sortie (4b) de la cavité,
dans lequel
l'implant est doté d'un filetage externe (5a), au moyen duquel l'implant (5) peut être vissé dans la cavité (4) ;
la partie supérieure/externe a un fourreau interne (20) pour un outil tournant;
lesdites surfaces (14a) s'étendant de manière périphérique sont formées sur un agencement de rebords;
chaque surface est dotée d'un motif (8) de rainures (10) et/ou de niches;
ledit motif de rainures ayant au moins deux directions d'inclinaison;
les rainures (10) et/ou les niches ont une profondeur (D) qui se trouve dans la plage de 50 - 100 µm, et est de préférence d'environ 70 µm; et
les rainures (10) et/ou les niches ont une largeur (B) dans la plage de 100 - 150 µm, et est de préférence d'environ 110 µm.

2. Implant tel que revendiqué dans la revendication du brevet, **caractérisé en ce que** le fourreau interne (20) est polygonale, dentée ou avec deux ou plusieurs ailes, et les rainures et/ou les niches sont agencées au niveau de parties (17b, 17c) d'une épaisseur de matière plus grande au niveau de la partie supérieure/externe.

3. Implant tel que revendiqué dans l'une des revendications précédentes du brevet, **caractérisé en ce que** le motif comprend des parties de rainures droites et parallèles (16, 16a') qui sont agencées autour de l'ensemble ou d'une partie de la surface périphérique, et **en ce que** les parties de rainures s'étendent de 10-45° par rapport à une surface en section transversale qui est perpendiculaire à l'axe longitudinal (15) de l'implant.

4. Implant tel que revendiqué dans l'une des revendications 1 à 3 du brevet, **caractérisé en ce que** le motif comprend des parties de rainures et/ou de niches sinusoïdales (18b, 18c, 18d).

5. Implant tel que revendiqué dans l'une des revendications 1 à 2 du brevet, **caractérisé en ce que** le motif comprend un ou plusieurs groupes de rainures (18d) que l'on agence mutuellement parallèlement et avec des portées longitudinales distinctes.

6. Implant tel que revendiqué dans l'une des revendications 1 à 5 du brevet, **caractérisé en ce que** ledit agencement de rebords (17) est cylindrique.

7. Implant tel que revendiqué dans l'une des revendications 1 à 5 du brevet, **caractérisé en ce que** ledit agencement de rebords (22) est conique.

8. Implant tel que revendiqué dans l'une des revendications 1 à 5 du brevet, **caractérisé en ce que** ledit agencement de rebords (21) est festonné.
